# EUROPÄISCHE PATENTSCHRIFT

(11) **EP 1 453 334 B1**
(45) Veröffentlichungstag und Bekanntmachung des Hinweises auf die Patenterteilung: **03.12.2008**
(21) Anmeldenummer: 04004113.9
(22) Anmeldetag: 24.02.2004
(51) Int. Cl.: H04Q 7/32, G08C 17/02

(54) **Verfahren und Vorrichtung zur Erfassung, Übertragung und Auswertung sicherheitsgerichteter Signale**
Method and device for the obtaining, transmission and evaluation of security related signals
Procédé et appareil pour obtenir, transmettre et évaluer des signaux liés à la sécurité

(30) Priorität: 25.02.2003 DE 10308180; 16.10.2003 DE 10348703
(43) Veröffentlichungstag der Anmeldung: 01.09.2004
(73) Patentinhaber: Elan Schaltelemente GmbH & Co. KG, 35435 Wettenberg (DE)
(72) Erfinder: Niehaus, Michael, 61197 Florstadt (DE); Koch, Jörg, 35452 Heuchelheim (DE)
(74) Vertreter: Stoffregen, Hans-Herbert

(56) Entgegenhaltungen:
- DE-A1- 4 437 490
- DE-A1- 19 920 299

## Beschreibung

Die Erfindung bezieht sich auf ein Verfahren zur Erfassung, Übertragung und Auswertung sicherheitsgerichteter Signale wie Not-Aus-Signale nach dem Oberbegriff des Anspruchs 1 sowie auf eine Vorrichtung zur Durchführung des Verfahrens nach dem Oberbegriff des Anspruchs 12.

Aus der DE 199 20 299 A1 ist ein Verfahren sowie eine Vorrichtung zur Erfassung, Übertragung und Verarbeitung sicherheitsgerichteter Signale bekannt, welche die Anwendung der Funktechnik zur Übertragung von Not-Aus-, Start-, Stopp-, sowie Verfahr- und Zustimmungssignalen von industriellen Bearbeitungsmaschinen wie beispielsweise numerisch gesteuerten Werkzeugmaschinen und Robotern über Funk erlaubt. Dabei ist vorgesehen, dass sicherheitsgerichtete Signale auf Senderseite physikalisch mindestens zweikanalig erfasst, die erfassten Daten logisch mindestens zweikanalig in sicherer Technik über Funk übertragen und die empfangenen Daten auf der Empfängerseite ebenfalls physikalisch mindestens zweikanalig verarbeitet und überwacht werden. Neben den sicherheitsgerichteten Signaldaten werden für Überwachungszwecke zusätzliche Sicherungsdaten erzeugt, mit denen auf Empfängerseite eine Überwachung durch Überprüfung eines Redundanzwerts zur Datensicherung auf Plausibilität sowie ein kreuzweiser Vergleich der Auswertungsergebnisse vorgenommen wird.

Dem bekannten Verfahren sowie der bekannten Vorrichtung liegt der Nachteil zugrunde, dass durch den zweikanaligen Aufbau des Erfassungsmittels ein nicht unerheblicher Hard- und Softwareaufwand betrieben werden muss, so dass eine aufwendige und kostenintensive Lösung zur Verfügung gestellt wird.

In der DE 44 37 490 A1 ist eine Hochfrequenz-Empfangseinrichtung für mobile Funkdaten-Übertragungssysteme, beispielsweise für Funkfernsteuerungen bei Baukranen, Fahrzeugen usw. beschrieben. Diese ist mit wenigstens zwei Empfangsantennen und einem Antennenumschalter ausgerüstet, der jeweils eine der Antennen an ein HF-Empfangsteil schaltet. Die demodulierten Datentelegramme werden in einem Funkdaten-Decoder in Femsteuersignale umgewandelt, die über Leitungen an das ferngesteuert te Gerät übertragen werden. Dem Funkdaten-Decoder ist ein Fehler-Decoder mit Timer zugeordnet. Dieser steuert den Antennenumschalter immer dann weiter, wenn ein fehlerfreies Datentelegramm gelesen werden konnte. Auf diese Weise können Mehrwe-ge-Empfanpsstörungen beseitigt werden, ohne dass die an derartige Funkdaten-Übertragungssysteme gestellten besonderen Sicherheitsanforderungen darunter leiden.

Der vorliegenden Erfindung liegt das Problem zugrunde, ein Verfahren sowie eine Vorrichtung zum Erfassen, Übertragen und Verarbeitung sicherheitsgerichteter Signale zur Verfügung zu stellen, die gegenüber dem Stand der Technik einen einfacheren Aufbau aufweist und kostengünstiger zu realisieren ist.

Das Problem wird verfahrensmäßig unter anderem durch die kennzeichnenden Merkmale des Anspruchs 1 gelöst. Durch die erfindungsgemäße Ausführungsform kann auf einen bidirektionalen Datenverkehr zwischen einer Mobilstation und einer Basisstation verzichtet werden, ohne dass durch diesen Verzicht die Anforderungen an eine sicherheitsgerichtete Funkstrecke verletzt werden. Ein besonderer Vorteil des erfindungsgemäßen Verfahrens ist darin zu sehen, dass ein sicherheitsgerichteter Steuerbefehl durch die Unterbrechung der Versorgungsspannung des Senders realisiert werden kann. Das beschriebene Verfahren erlaubt zudem eine miniaturisierte Bauform, die insbesondere auch für einfache Sicherheitsschaltkreise geeignet ist und eine energiesparende Funktionsweise erlaubt.

Bei einer bevorzugten Verfahrensweise ist vorgesehen, dass zur Übertragung der sicherheitsgerichteten Signale geringer Sicherheitsstufe wie SIL1/KAT2 ein Telegramm gebildet wird, welches einen Identifier-Teil der Mobilstation, einen Zähler-Teil, einen Daten-Teil und einen Prüfsummen-Teil aufweist. Zur Erhöhung der Datensicherheit ist vorgesehen, dass das Telegramm mehrmals vorzugsweise drei Mal gesendet wird. Um Energie zu sparen zeichnet sich eine weitere bevorzugte Verfahrensweise dadurch aus, dass die Telegramme in Intervallen in einem Zeitbereich von 20 - 40 ms gesendet werden, vorzugsweise alle 27 ms, vorzugsweise drei Telegramme mit einer Gesamtdauer im Bereich von 5 - 10 ms, vorzugsweise 6,8 ms.

Die empfangenen Telegramme werden in der Basisstation in jedem Kanal überprüft auf:
- Identifier der Mobilstation
- Zählerstand, und
- Sendezyklus

Um Performance und Speicherplatz zu sparen, werden die Prüfsummenwerte im Sende-Teil in einer Tabelle gespeichert.

Es ist vorgesehen, dass bei einer Erstinbetriebnahme eine Konfiguration der Mobilstation und der Basisstation mittels eines Personal Computers über eine serielle Schnittstelle erfolgt, wobei in der Mobilstation der Identifier eingestellt wird und in die Tabelle die Prüfsummenwerte übertragen werden und wobei in der Basisstation der Identifier der Mobilstation und die in der Mobilstation belegten Eingänge übermittelt werden und das Verhalten der Ausgänge der Basisstation konfiguriert wird.

Bei einem weiteren bevorzugten Verfahren ist vorgesehen, dass bei einem Verbindungsaufbau zwischen Mobilstation und Basisstation die Funkstrecke in Abhängigkeit von einem sicheren Eingang der Mobilstation und/oder der Basisstation aktiviert und/oder deaktiviert wird und dass davon abhängig die sicheren und/oder die nicht sicheren Ausgänge der Mobilstation und/oder der Basisstation gesetzt werden.

Zur weiteren Sicherheit ist vorgesehen, dass die Basisstation bei jeder Aktivierung und/oder nach Ablauf einer bestimmten Zeit überprüft, ob alle konfigurierten sicheren Eingänge des Mobilteils einmal geöffnet und/oder geschlossen wurden, bevor die Basisstation einen ihrer sicheren Ausgänge freigibt.

Das Problem wird durch eine Vorrichtung gelöst, welche die kennzeichnenden Merkmale des Anspruchs 20 umfasst. Die Vorrichtung zeichnet sich insbesondere dadurch aus, dass der Sende-Teil einkanalig ausgebildet ist, so dass dieser einen einfachen Hardwareaufbau aufweist, der in miniaturisierter Bauform realisiert werden kann, wie dies insbesondere auch für einfache Sicherheitsschaltgeräte geeignet ist. Durch die Unterbrechung der Versorgungsspannung des Erfassungsmittels und/oder des Sendemittels innerhalb der Mobilstation mittels eines sicheren Befehlsgeräts wird die Möglichkeit eröffnet, die Sendung von Signalen zu unterbrechen, was von der Basisstation sicher erkannt wird, die sodann sämtliche Ausgänge in den sicheren Zustand schaltet. Auf diese Weise wird mittels eines einkanaligen Erfassungsmittels und einer einkanaligen Funkstrecke sicherheitsgerichtet ein Signal hoher Sicherheitsstufe wie beispielsweise SIL3/Kat4 übertragen, welches sodann zweikanalig ausgewertet wird, da die Basisstation den Anforderungen nach SIL3 genügt.

Weitere Einzelheiten, Vorteile und Merkmale der vorliegenden Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine schematische Darstellung einer ersten Ausführungsform einer Anordnung zur Erfassung, Übertragung und Verarbeitung sicherheitsgerichteter Signale,
- Fig. 2: eine schematische Darstellung einer zweiten Ausführungsform einer Anordnung zur Erfassung, Übertragung und Verarbeitung sicherheitsgerichteter Signale,
- Fig. 3: eine schematische Darstellung einer dritten Ausführungsform einer Anordnung zur Erfassung, Übertragung und Verarbeitung sicherheitsgerichteter Signale,
- Fig. 4: eine schematische Darstellung einer vierten Ausführungsform einer Anordnung zur Erfassung, Übertragung und Verarbeitung sicherheitsgerichteter Signale,
- Fig. 5: eine schematische Darstellung einer fünften Ausführungsform einer Anordnung zur Erfassung, Übertragung und Verarbeitung sicherheitsgerichteter Signale,
- Fig. 6: eine schematische Darstellung eines Übertragungsrahmens für zu übertragende Telegramme,
- Fig. 7: einen schematischen Aufbau eines Telegramms mit sicherheitsgerichteten Informationen,
- Fig. 8: einen schematischen Aufbau eines Telegramms mit zusätzlichen Informationen,
- Fig. 9: ein schematisches Zeitdiagramm einer ersten Variante eines Sendezyklus,
- Fig. 10: ein schematisches Zeitdiagramm einer zweiten Variante eines Sendezyklus,
- Fig. 11: ein schematisches Zeitdiagramm einer dritten Variante eines Sendezyklus und
- Fig. 12: ein schematisches Zeitdiagramm einer vierten Variante eines Sendezyklus.

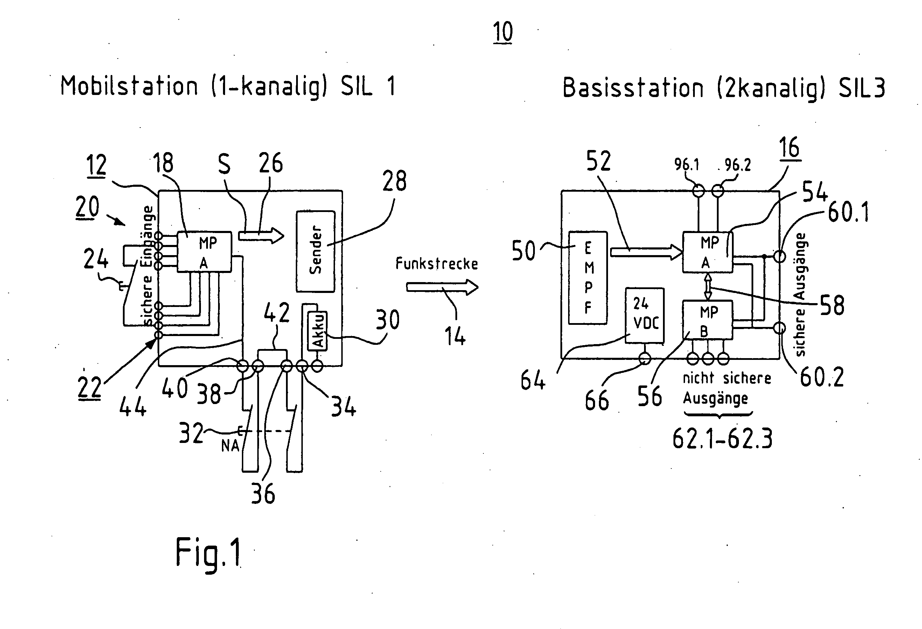

Fig. 1 zeigt eine erste Ausführungsform einer Anordnung 10 zur Erfassung, Übertragung und Verarbeitung sicherheitsgerichteter Signale. Die Anordnung 10 umfasst eine Mobilstation 12 wie beispielsweise ein mobiles Handgerät, welches sicherheitsgerichtet Signale S über eine Funkstrecke 14 zu einer Basisstation 16 überträgt.

Die Mobilstation 12 umfasst eine einkanalige Erfassungseinheit 18 wie Mikroprozessor mit Ausgängen 20 und Eingängen 22, wobei jeweils einer der Ausgänge 20 mit einem der Eingänge 22 über ein Eingabemittel 24 wie beispielsweise ein Tastschalter, welcher als Öffner ausgebildet ist, miteinander verbunden werden kann. Die Eingänge 22 können auch als sichere Eingänge bezeichnet werden, die einer Sicherheitskategorie wie beispielsweise SIL1/KAT2 entsprechen. Bei den von dem Eingabemittel 24 abgegebenen Signalen kann es sich um Start-, Stop-, sowie um Zustimmungssignale handeln. Aus den am Erfassungsmittel 18 anliegenden sicherheitsgerichteten Signalen werden Signaldaten 26 generiert, die über einen Sender 28 und die Funkstrecke 14 zu der Basisstation 16 übertragen werden.

Des Weiteren umfasst die Mobilstation 12 eine Energieversorgungseinheit 30 wie Akkumulator zur Energieversorgung des Erfassungsmittels 18 und des Senders 28. Die Energieversorgung für das Erfassungsmittel 18 und/oder den Sender 28 kann mittels eines Eingabegeräts 32 wie Not-Aus-Schalters unterbrochen werden. Hierzu ist im vorliegenden Ausführungsbeispiel vorgesehen, dass die Mobilstation Anschlussklemmen 34, 36, 38, 40 aufweist, wobei die Klemme 34 mit einem ersten Pol des Akkumulators 30 verbunden ist, dessen zweiter Pol an Masse liegt. Die Klemmen 36 und 38 sind intern über eine Verbindung 42 verbunden, wobei die Klemme 40 intern mit einem Energieversorgungseingang des Erfassungsmittels 18 und/oder des Senders 28 über eine Leitung 44 verbunden ist. Zur Verbindung bzw. Unterbrechung der Energieversorgung weist das Eingabemittel 42 zwei Öffnerkontakte 46, 48 auf, welche jeweils mit den Kontakten 36, 34 bzw. 38, 40 verbunden sind. Im geschlossenen Zustand des Eingabegeräts wird das Erfassungsmittel 18 und/oder der Sender 28 mit Energie versorgt. Durch Betätigung des Eingabegeräts 32 wird die Versorgungsspannung unterbrochen, so dass keine Signale über den Sender 28 gesendet werden können.

Die Basisstation 16 umfasst einen Empfänger 50, dessen Ausgangssignale 52 mittels Verarbeitungseinheiten 54, 56 verarbeitet werden. Die Verarbeitungseinheiten 54, 56 sind als Mikroprozessoren ausgebildet und über eine Verbindung 58 miteinander gekoppelt, so dass die Signale zweikanalig ausgewertet und miteinander verglichen werden können. Die Basisstation 16 umfasst sichere Ausgänge 60.1, 60.2, wobei jeder Ausgang mit jeweils einem Ausgang der Verarbeitungseinheit 54 und einem Ausgang der Verarbeitungseinheit 56 verbunden ist. Ferner sind nicht sichere Ausgänge 62.1, 62.2, 62.3 vorgesehen, die beispielsweise an der Verarbeitungseinheit 56 angeschlossen sind. Zur Energieversorgung der Basisstation ist eine Versorgungseinheit 64 vorgesehen, welche mit einem Eingang 66 verbunden ist.

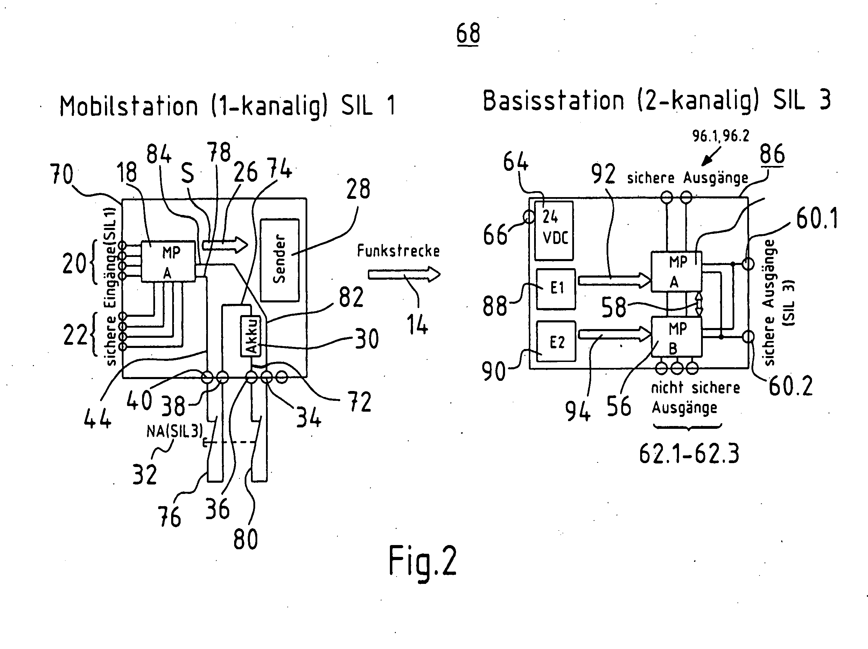

Fig. 2 zeigt eine zweite Ausführungsform einer Anordnung 68 zur Erfassung, Übertragung und Verarbeitung sicherheitsgerichteter Signale. Im Folgenden werden gleiche Elemente mit gleichen Bezugszeichen gekennzeichnet. Die Anordnung 68 umfasst eine Mobilstation 70, die im Wesentlichen den gleichen Aufbau aufweist, wie die Mobilstation 12 der Anordnung 10. Im Gegensatz zu der Ausführungsform gemäß Fig. 1 ist ein erster Pol 72 des Akkumulators 30 mit der Klemme 36 und ein zweiter Pol 74 des Akkus 30 mit der Klemme 38 verbunden. Über einen Öffnerkontakt 76, der mit den Klemmen 38 und 40 verbunden ist, ist der zweite Pol 74 über die Zuleitung 44 mit einem ersten Pol 78 des Erfassungsmittels 18 verbindbar. Der erste Pol 72 des Akkumulators ist über einen Öffnerkontakt 80 mit der Klemme 34 und über eine weitere Zuleitung 82 mit einem zweiten Pol 84 des Erfassungsmittels 18 verbindbar.

Gegenüber der Ausführungsform nach Fig. 1 zeichnet sich die Mobilstation 70 dadurch aus, dass die Stromversorgung für das Erfassungsmittel 18 zweipolig trennbar ist. Die Anordnung 68 weist eine Basisstation 86 auf, welche sich gegenüber der Basisstation 16 dadurch unterscheidet, dass eine erste Empfangseinheit 88 und eine zweite Empfangseinheit 90 vorgesehen ist. Dabei ist jeder Empfänger 88, 90 über eine Verbindung 92, 94 mit der ersten 54 bzw. zweiten Auswerteeinheit 56 verbunden. D.h., die empfangenen Signale werden jeweils in den Auswerteeinheiten 54, 56 verarbeitet und sodann über die Verbindung 58 miteinander verglichen. Ferner sind sichere Eingänge 96.1, 96.2 vorgesehen, die mit den Auswerteeinheiten 54 und 56 verbunden sind.

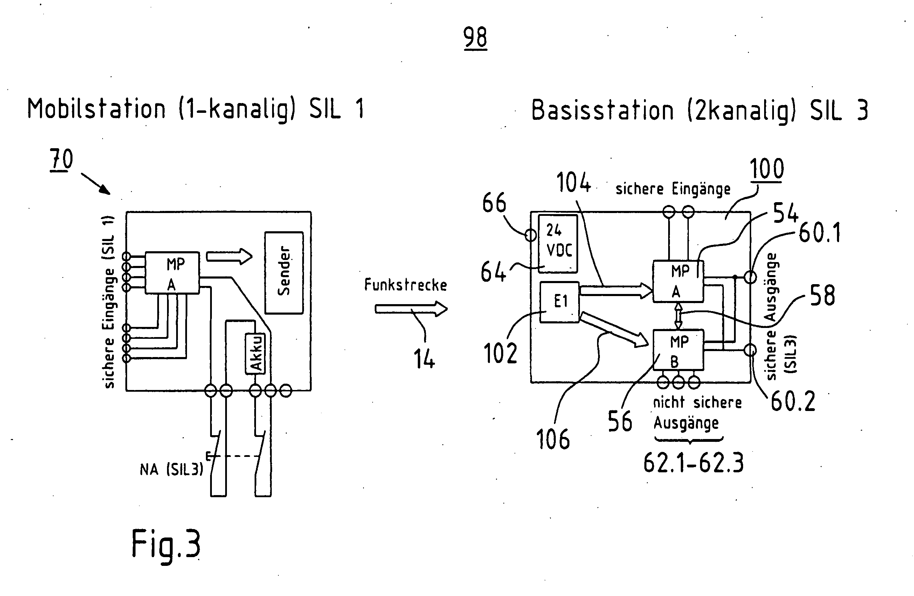

Fig. 3 zeigt rein schematisch eine dritte Ausführungsform einer Anordnung 98 zur Erfassung, Übertragung und Verarbeitung sicherheitsgerichteter Signale. Die Anordnung 98 umfasst die Mobilstation 70, die der gemäß Fig. 2 entspricht. Ferner umfasst die Anordnung 98 eine Basisstation 100, welche einen Empfänger 102 aufweist, der über Verbindungen 104, 106 mit jeweils einer der Auswerteeinheiten 54, 56 verbunden ist. D.h., die in dem Empfänger 102 empfangenen Signale werden jeweils auf die Empfangseinheiten 54, 56 geleitet und in diesen über die Verbindung 58 miteinander verglichen.

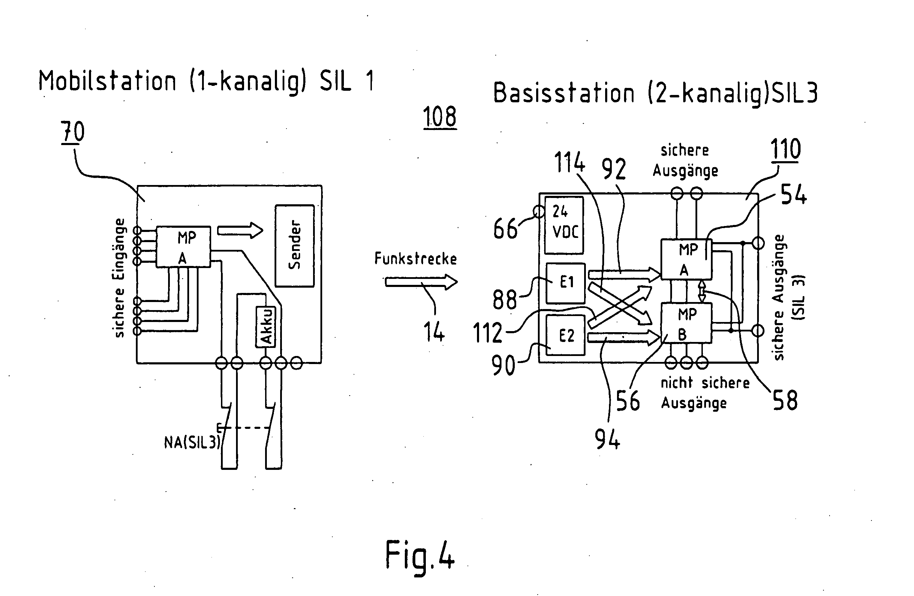

Fig. 4 zeigt eine schematische Darstellung einer vierten Ausführungsform 108 einer Anordnung zur Erfassung, Übertragung und Verarbeitung sicherheitsgerichteter Signale. Die Mobilstation 70 entspricht in ihrem Aufbau der Mobilstation der Ausführungsformen 68 und 98. Die Anordnung 108 umfasst eine Basisstation 110, die der Basisstation 86 entspricht und ebenfalls zwei Empfänger 88, 90 aufweist. Im Unterschied zu der Ausführungsform gemäß Fig. 2 sind neben den Verbindungen 92, 94, die jeweils einen der Empfänger mit einer der Auswerteeinheiten 54, 56 verbinden, zusätzliche Verbindungen 112, 114 vorgesehen, welche die Empfänger jeweils mit einer weiteren Empfangseinheit verbinden, so dass der Empfänger 88 mit den Empfangseinheiten 54 und 56 der Empfänger 90 mit den Empfangseinheiten 54, 56 verbunden ist. Über die Verbindung 58 erfolgt sodann ein Vergleich der in den Empfangseinheiten 54, 56 empfangenen Signale.

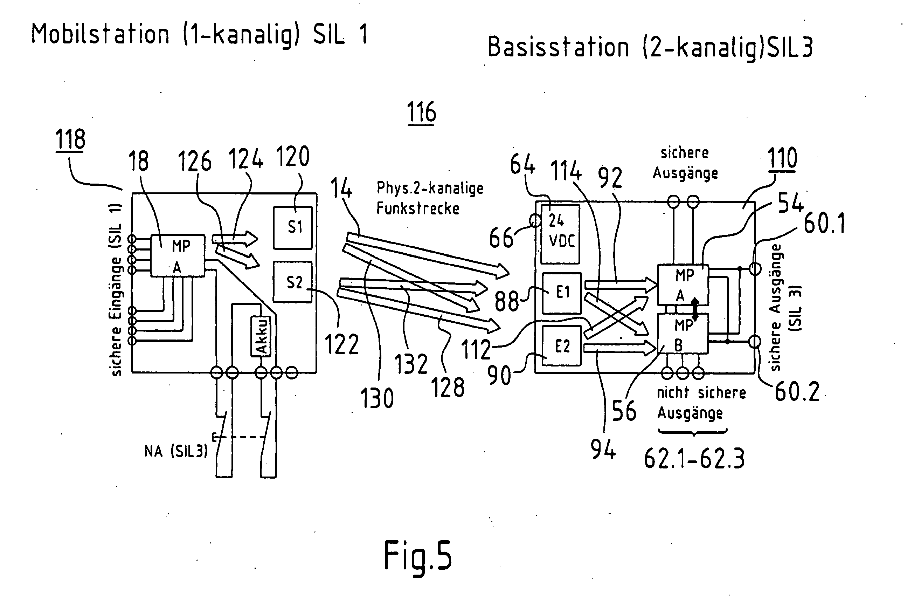

Fig. 5 zeigt eine fünfte Ausführungsform einer Anordnung 116 zur Erfassung, Übertragung und Verarbeitung sicherheitsgerichteter Signale. Diese Anordnung umfasst eine Mobilstation 118, mit einem ersten Sender 120 und einem zweiten Sender 122, welche über Verbindungen 124, 126 mit der Erfassungseinheit 18 verbunden sind. Die Basisstation 110 entspricht im Wesentlichen der Basisstation gemäß Fig. 4, mit zwei Empfängern 88, 90, welche kreuzweise über die Verbindungen 92, 94, 112, 114 mit den Empfangseinheiten 54, 56 verbunden sind. Im Unterschied zu den vorhergehenden Anordnungen 10, 68, 98, 108, können nunmehr unterschiedliche Funkstrecken 14, 128, 130, 132 ausgeführt werden, wobei Sender 120 auf einen der Empfänger 98, 90, bzw. der Sender 122 auf einen der Empfänger 88, 90 sendet. Durch die beschriebenen Maßnahmen wird die Verfügbarkeit der Funkstrecke erhöht. Dabei handelt es sich um eine physikalisch zweikanalige Funkstrecke.

Die Anordnungen 10, 68, 98, 108 zeichnen sich dadurch aus, dass die Mobilstation 12, 70 einkanalig aufgebaut ist, wodurch ein einfacher und kostengünstiger Aufbau realisiert werden kann, der auch eine miniaturisierte Bauform erlaubt. Die Mobilstation 12, 70 verfügt über die Möglichkeit, die an den sicheren Eingängen 22.1 - 22.4 durch Eingabemittel 24 wie Zustimmungstaster, "+-Taster", "--Taster" oder kundenspezifische Eingabemittel erzeugten Signale über die Funkstrecke 14 zu übertragen. Bei den an den sicheren Eingängen 22.1 - 22.4 anliegenden Signalen handelt es sich um Signale geringer Sicherheitsstufe, wie beispielsweise KAT2/SIL1. Zur Übertragung von Signalen dieser Sicherheitsstufe ist eine zweikanalige Erfassung und zweikanalige Übertragung nicht zwingend vorgesehen.

Des Weiteren besteht die Möglichkeit, zumindest ein Signal einer höheren Sicherheitskategorie wie KAT4/SIL3 zu übertragen. Hierzu ist erfindungsgemäß vorgesehen, dass die Energieversorgung 30 der Mobilstation 12, 70 mittels des Befehlsgerätes 32, welches beispielsweise als Not-Aus-Schalter ausgebildet ist, ein- oder zweipolig zu unterbrechen. Über den Eingang 40, der auch als SIL3-Eingang bezeichnet werden kann, wird die Versorgungsspannung des Erfassungsmittels 18 und/oder des Senders 28 abgeschaltet. Dies hat zur Folge, dass keine Signale mehr gesendet werden können.

Durch die der Sicherheitsstufe SIL3 entsprechende Basisstation 16 erfolgt eine zweikanalige Überwachung der Funkstrecke mittels Zeiterwartungshaltung. Bei einem Ausbleiben von Signalen werden die sicheren Ausgänge 60.1, 60.2 in den sicheren Zustand geschaltet.

Auf einen bidirektionalen Datenverkehr zwischen Mobilstation 12, 70 und Basisstation 16, 100, 110 kann somit verzichtet werden, ohne dass durch diesen Verzicht die Anforderungen an eine sicherheitsgerichtete Funkstrecke verletzt werden. Ein sicherheitsgerichteter Steuerbefehl des Eingabegeräts 32 kann im Hinblick auf die Wirkung des Verfahrens insofern einfach durch die Unterbrechung der Versorgungsspannung der Komponenten der Mobilstation 12 realisiert werden.

Wie bereits erwähnt, kann das Befehlsgerät 32 als Not-Aus-Schalter der Kategorie SIL3/KAT4 ausgebildet sein, wobei die Eingabemittel 24 beispielsweise als Zustimmungstaste der Kategorie SIL1/KAT2 entsprechen. Auch besteht die Möglichkeit, dass das Befehlsgerät 32 ein Zustimmungstaster der Kategorie SIL3/KAT4 ist und mit den Ausgängen 34, 36, 38, 40 verbunden ist, wobei die Eingabemittel 24 dann z.B. als Start-Taster, Stopp-Taster und/oder Tipp-Taster ausgebildet sind.

Die Basisstation 16, 86, 100, 110 verfügt über zwei Halbleiterausgänge 60.1, 60.2, die einem Ausgang der Sicherheitskategorie KAT4/SIL3 entsprechen, deren Funktion in Abhängigkeit der Eingänge der Mobilstation 12, 70, 118 parametriert werden können. Die nicht sicheren Ausgänge 62.1 - 62.3 können ebenfalls in ihrer Funktion in Abhängigkeit der Eingänge 22.1 - 22.4 der Mobilstation 12, 70, 118 parametriert werden. Den Ausgängen können Funktion wie "keine Funkstrecke verfügbar" und/oder "bitte Testung am Mobilteil einleiten" sowie kundenspezifische Informationen zugeordnet werden.

Die Eingänge 96.1 und 96.2 können als sichere Eingänge der Sicherheitskategorie KAT4/SIL3 bezeichnet werden und können zur Aktivierung der Funkstrecke 14 verwendet werden.

Wie bereits zuvor erwähnt, werden nur die Signale der sicheren Eingänge 20, 22 über die Funkstrecke 14 zu der Basisstation 16 übertragen. Die Mobilstation 18 muss deshalb zumindest der Sicherheitskategorie SIL1 entsprechen. Beim Initialisieren der Funkstrecke 14 kann eine Testung der Mobilstation und der Funkstrecke durch die Basisstation 16 erfolgen, indem die Basisstation erst die sicheren Ausgänge 60.1 - 60.2 freigibt, wenn jeder Eingang 22.1-22.4 der Mobilstation 12 mindestens einmal betätigt wurde. Das Erfassungsmittel 18, verfügt über mindestens vier Ausgänge 20.1 - 20.4 und mindestens vier Eingänge 22.1 - 22.4, wobei jeder Eingang 22.1 - 22.4 über ein Befehlsgerät 24 mit einem der Ausgänge 20.1 - 20.4 verbindbar ist. Erkennt das Erfassungsmittel 18 an einem Eingang 22.1 - 22.4 das Potential "HIGH" so kann durch das Abschalten des zugeordneten Ausgangs 20.1 - 20.4 eine Testung durchgeführt werden.

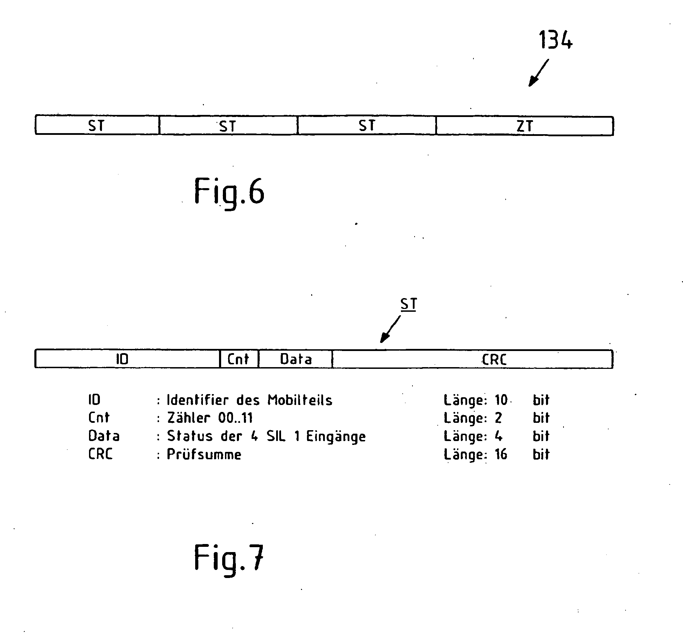

Fig. 6 zeigt einen möglichen Übertragungsrahmen 14, der vorzugsweise eine dreifache Wiederholung eines Telegramms ST mit sicherheitsgerichteten Informationen und anschließend die Übertragung eines Telegramms ZT mit zusätzlichen Informationen vorsieht. Der Aufbau des Telegramms ST ist in Fig. 7 dargestellt.

Das Telegramm ST besteht aus einem Identifier-Teil ID der jeweiligen Mobilstation 12, 70, 118 mit einer Länge von 10 Bit, einem Zähler-Teil CNT mit einer Länge von 2 Bit, einem Daten-Teil DATA, welcher den Status der SIL1-Eingänge 22.1 - 22.4 repräsentiert, mit einer Länge von 4 Bit und einem Prüfsummen-Teil CRC mit einer Länge von 16 Bit. Somit umfasst die Telegrammlänge insgesamt 32 Bit und erreicht eine Hemmingdistanz von 4. Zur Erhöhung der Hemmingdistanz auf einen Wert von 12 besteht die Möglichkeit, das Telegramm insgesamt dreimal zu senden. Damit ergeben sich folgenden Werte:

| | | |
|---|---|---|
| • sicherheitsrelevante Signale | V | 10 |
| • Zahl der Übertragungen bei m Teilnehmern | m-1 | 1 |
| • Bitfehlerwahrscheinlichkeit | p | 1,00E-02 |
| • R(p) bei HD = 12 | | 1,85 E-16 |
| • Λ | | 6,75 E-10 |

Für SIL1 muss Λ < 10⁻⁵ sein, so dass im vorliegenden Fall diese Anforderungen erreicht werden.

Nachdem einer der Mobilstationen 12, 70, 108 ein Identifier ID vergeben wurde, können nur 6 Bits im Datenteil DATA-variabel sein, d.h., 2 Bit für den Zähler CNT und 4 Bit für die Daten. Daraus folgt, dass die Prüfsumme CRC maximal 2⁶ = 64 verschiedene Werte annehmen kann. Diese Werte werden in der Mobilstation in einer Tabelle abgelegt, um Performance und Platz zu sparen. In der Basisstation wird der Algorithmus jedoch vollständig nachgebildet.

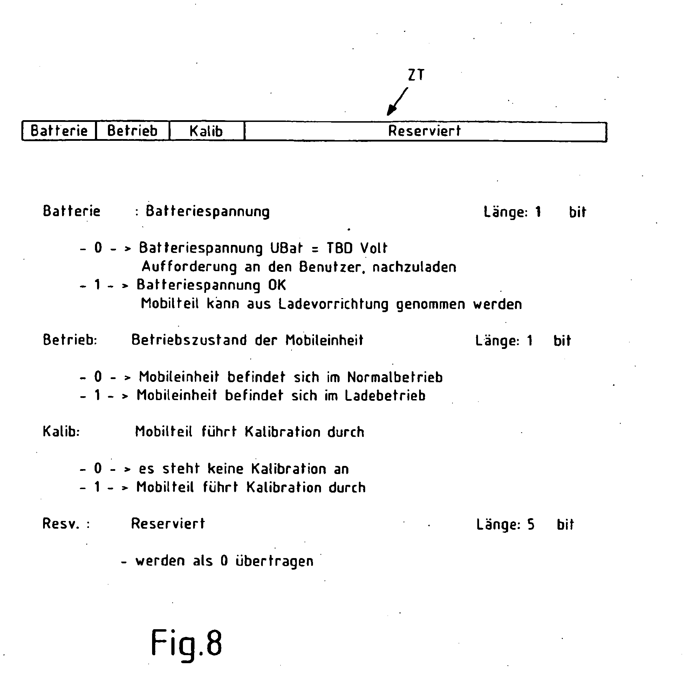

Der Aufbau des Telegramms ZT ist in Fig. 8 dargestellt. Das Telegramm ZT umfasst ein Batterie-Teil mit der Länge von einem Bit, welcher den Zustand der Batterie wiedergibt. Ferner ist ein Betrieb-Teil vorgesehen, welches die Länge von einem Bit umfasst und den Betriebszustand der Mobileinheit repräsentiert. Ferner ist ein Kalib-Teil vorgesehen, welches ebenfalls die Länge von einem Bit umfasst und anzeigt, dass das Mobilteil eine Kalibration durchführt. Ferner ist ein Reserveteil mit der Länge von 5 Bit vorgesehen.

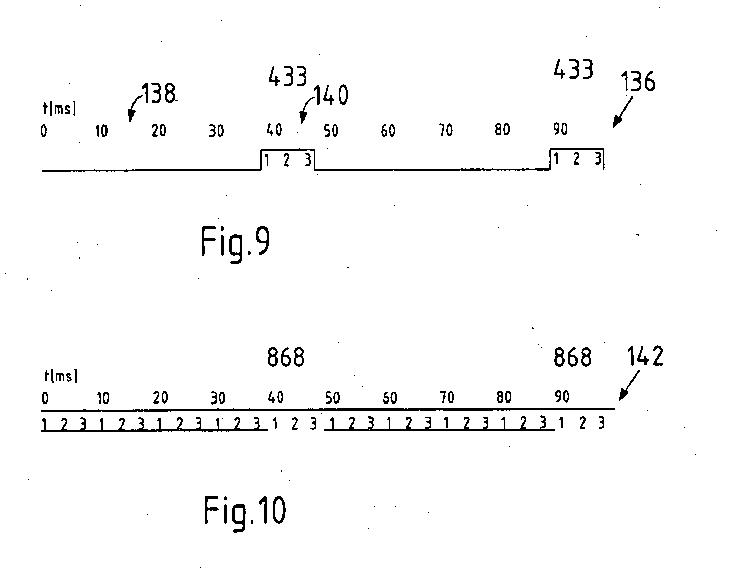

Die Figs. 9 - 12 zeigen mögliche Aufbauten von Sendezyklen als Zeitdiagramme. Fig. 9 zeigt eine erste Variante eines Sendezyklus 136 mit Duty Cycle von etwa 20 %, d.h., eine Ausschaltzeitdauer 138 von ca. 40 ms und einer Einschaltzeitdauer 140 von ca. 10 ms. In der Einschaltzeitdauer 140 werden vorzugsweise 3 Telegramme ST übertragen und zwar in einem Frequenzband von 433 MHz.

Fig. 10 zeigt einen Sendezyklus 142 mit 100 % Duty Cycle im 868 MHz-Frequenzband. Dabei werden ohne Unterbrechung jeweils 3 Telegramme innerhalb einer Zeitdauer von 10 ms übertragen.

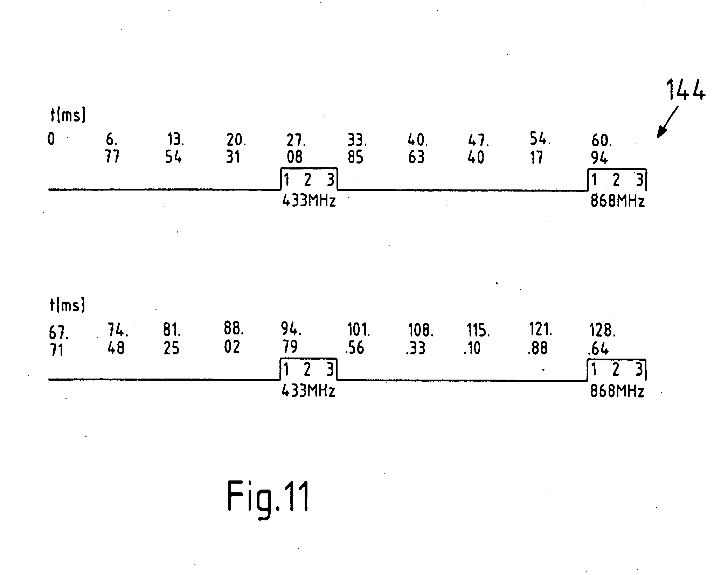

Eine bevorzugte Variante eines Sendezyklus 144 ist in Fig. 11 dargestellt, wobei mit abwechselnden Frequenzen beispielsweise 433 MHz und 868 MHz und einem Duty Cycle von 10 % jeweils 3 Telegramme in Intervallen gesendet werden.

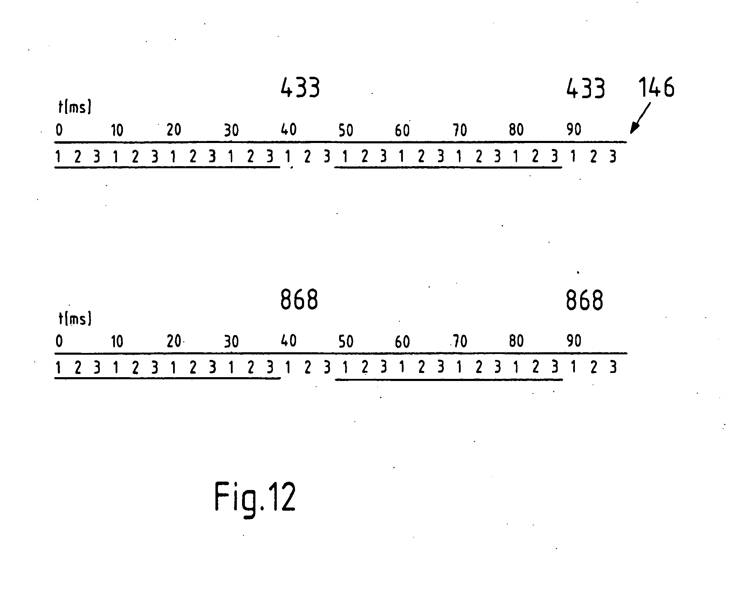

Fig. 12 zeigt eine Variante eines Sendezyklus 146 mit 100 % Duty Cycle im 433 MHz und 868 MHz-Frequenzband bei Anordnung von zwei Sendern, wie dies beispielsweise in der Anordnung 116 der Mobilstation 118 und den Sendern 120, 122 dargestellt ist. Dabei sind auch zwei Empfänger 88, 90 vorgesehen, wobei die Sender 120, 122 gleichzeitig senden um somit eine zweikanalige Funkstrecke aufzubauen.

Selbstverständlich sind auch Kombinationen der Sendezyklen gemäß Figs. 9 - 12 denkbar, wie z.B. der Sendezyklus 142 gemäß Fig. 10 mit 433 MHz-Frequenzband oder auch in anderen Frequenzbändern oder der Sendezyklus 144 mit zusätzlichen Frequenzbändern und den in Fig. 11 dargestellten Pausenzeiten oder in mit anderen Frequenzkombinationen und/oder der Sendezyklus 136 gemäß Fig. 9 in anderen Frequenzbändern.

Bei der Übertragung eines Telegramms ST wird von einer Baudrate von beispielsweise 19.200 Baud ausgegangen.

Wie aus dem Sendezyklus zu erkennen ist, wird nur alle 40 ms für ca. 10 ms. gesendet. Ist ein Telegramm 68 gestört, so muss das nächste Telegramm korrekt von der Basisstation 16 empfangen werden, sonst geht die Basisstation 16 in den sicheren Zustand.

Um zu verhindern, dass Signale von zwei oder mehreren Mobilstationen 12 verwechselt werden, sind Vorkehrungen getroffen. Dabei ist vorgesehen, dass jede Mobilstation 12 auf einer anderen Frequenz sendet und jeweils einen eigenen Identifizierer ID besitzt ist. Ferner wird der Zählerstand CNT jeder Mobilstation 12 von der Basisstation 16 überwacht. Auch das Senden der Signale muss genau nach dem in Fig. 3 gezeigten Sendezyklus stattfinden, da ansonsten die Basisstation 16 in ihren sicheren Zustand schaltet.

Bei der Erstinbetriebnahme von Mobilstation und Basisstation wird eine Konfigurationssoftware mit Hilfe eines Personal Computers über eine serielle Schnittstelle übertragen. Bei der Erstinbetriebnahme wird sodann mittels der Konfigurationssoftware der jeweilige Identifier ID der Mobilstation eingestellt. Gleichzeitig wird von der Konfigurationssoftware eine Tabelle von CRC-Werten ermittelt und in die Mobilstation 12 übertragen. Zur Konfiguration der Basisstation 16 werden die Identifier ID der Mobilstationen 12 und die an den Mobilstationen belegten Eingänge 22.1 - 22.4 übermittelt und das Verhalten der vorhandenen Ausgängen 60.1 - 60.2; 62.1 - 62.3 konfiguriert.

Abhängig von einem sicheren Eingang 96.1, 96.2 wird die Funkstrecke 14 aktiviert bzw. deaktiviert. Davon abhängig werden auch die sicheren 60.1 - 60.2 bzw. nicht sicheren Ausgänge 62.1 - 62.3 der Basisstation 16 gesetzt. Dabei prüft die Basisstation bei jeder Aktivierung und/oder nach einer bestimmten Zeit, ob alle Konfigurierten Eingänge 22.1 - 22.4 der Sicherheitskategorie SIL1 einmal geöffnet und/oder geschlossen wurden, bevor die Basisstation 16 einen der sicheren Ausgänge 60.1 - 60.2 freigibt.

Wird beispielsweise über den sicheren Eingang 96.1 das Signal "Schutztür geöffnet/geschlossen" zur Verfügung gestellt, läuft eine von der Basisstation angesteuerte Maschine auch ohne Funkstrecke, wenn die Schutztür geschlossen ist, und läuft nur in Betrieb der Funkstrecke und Freigabe, wenn die Schutztür geöffnet ist.

Mit dem beschriebenen Verfahren können Signale von elektromechanischen, elektrischen und/oder elektronischen Sicherheitsschaltgeräten 24, 32 zu der - ebenfalls sicherheitsgerichteten - Auswerteeinheit 54, 56 über die Funkstrecke 14 übertragen werden, wobei die Funkstrecke 12 durch fehlertolerierende und/oder fehlerbeherrschende Maßnahmen geeignet ist, die besonderen Anforderungen zu erfüllen, die notwendig sind, um an Maschinen und maschinellen Anlagen eine so genannte Personenschutzfunktion ausführen zu können, sie dafür aber andererseits mit einem Minimum an Aufwand auskommt.

Insbesondere werden die Anforderungen der EG-Maschinenrichtlinie (MRL) bzw. in Deutschland im Gerätesicherheitsgesetz (GSG) sowie in der - diese gesetzlichen Vorschriften interpretierenden - IEC- und/oder EN-Normung, z.B. in IEC 61508, EN 954-1 sowie PREN 13849-1 erfüllt.

Die erfindungsgemäße Ausführungsform zeichnet sich insbesondere durch ihre strukturellen Maßnahmen wie einkanalige Erfassung sicherheitsgerichteter Signale geringer Sicherheitsstufe KAT2/SIL1, durch besondere Überwachungsroutine wie Zeiterwartungshaltung der Basisstation sowie Maßnahmen der Datenintegrität wie Zuordnung eines Identifiers ID zu jedem Mobil-Teil, Zuordnung verschiedener Frequenzen zu den Mobilstationen, Überwachung des Zählerstands der jeweiligen Mobilstation durch die Basisstation sowie das Senden in einem vorgegebenen Sendezyklusaus.

Durch die oben beschriebenen Maßnahmen kann ein sicherheitsgerichteter Steuerungsbefehl durch die Unterbrechung der Versorgungsspannung im Sender der Mobilstation 12 realisiert werden.

Die sicherheitsgerichtete Funkstrecke kann mit zusätzlichen Maßnahmen zur Störungsempfindlichkeit versehen sein.

Da aufgrund prinzipieller Überlegungen die Realisation einer sicherheitsgerichteten Funkstrecke für Maschinensteuerungen und ähnliche Anwendungen analog dem Ruhestromprinzip von Sicherheitsstromkreisen zu erfolgen hat, d. h. es besteht (im sogenannten Dauerstrich-Verfahren) immer eine kontinuierliche oder - unter Berücksichtigung gesetzlich vorgeschriebener und/oder noch zu erwartender Duty-cycles (= Begrenzung der Einschaltdauer) - eine quasi-kontinuierliche Funkverbindung zwischen Sender und Empfänger, ergeben sich wesentlich höhere Verfügbarkeitsrisiken für eine auf diese Weise aufgebaute Funkstrecke, insbesondere dann, wenn sie auf der Basis frei zugänglicher Funkfrequenzen arbeitet.

Jede Störung, sei es durch Interferenzen, sei es durch "Funklöcher", kann zu einer Abschaltung (Unterbrechung) führen und damit zu einem ungewollten Maschinenstopp mit Not-Aus-vergleichbarer Wirkung. Unter diesem Gesichtspunkt kommt erschwerend hinzu, dass der Anwendungsbereich einer sicherheitsgerichteten Funkstrecke für Maschinenanwendungen im Regelfall die Fabrikhalle ist, so dass - im Unterschied zu sogenannten Freifeld-Anwendungen - mit zusätzlichen Reflektionen und auch mit veränderlichen Störgrößen zu rechnen ist.

Es wird daher ergänzend vorgeschlagen, durch eine Kombination (in Summe oder auch nur teilweise) folgender Maßnahmen das Risiko von Störbeeinflussungen einer sicherheitsgerichteten Funkstrecke auf ein Minimum zu reduzieren:
- Maßnahme 1:: Durch geeignete Schaltungstechniken unter Verwendung von Oberflächenwellenfilter sowie diskreten passiven oder auch aktiven Filterstufen wird die Breitbandigkeit der Funksignale wesentlich eingeschränkt.
- Maßnahme 2:: Die Funkstrecke wird - um eine Fehlertoleranz zu gewährleisten - in einem geeigneten Mischbetrieb von zwei oder mehr Funkfrequenzen betrieben. Eine bevorzugte Ausführungsform besteht aus einem Dualband-System aufgebaut aus ISM- und SRD-Bereichen.
- Maßnahme 3:: Auf der Empfängerseite werden zwei oder mehr Empfangsantennen realisiert.
- Maßnahme 4:: Verwendung von numerisch kontrollierten Oszillatoren (numeric controled oscilators NCOs) bzw. Fractional N-Dividers (wie hier eingesetzt) zur hochauflösenden Einstellung sowohl des Local Oszillators im Empfänger als auch der Trägerfrequenz im Empfänger bilden die Grundlage eines schmalbandigen bzw. selektiven Funkbetriebes und der Immunität gegenüber breitbandigen Strahlern.
- Maßnahme 5:: Verwendung der Modulationsarten FSK (Frequency Shift Keying) und deren Varianten (wie zum Beispiel GFSK - Gaussian Frequency Shift Keying) zur Immunisierung gegenüber Interferenzen, wie sie im Vergleich zu amplitudenmodulierten Varianten zu erwarten sind.
- Maßnahme 6:: Verwendung von zwei- oder mehrstufigen Netzteilen zur Erhöhung der Empfängerempfindlichkeit als auch für einen zuverlässigen Sendebetrieb. Die Stufen der Netzteile können sowohl passiv (passive Filterstufen) als auch aktiv (zwei oder mehrere Spannungsregler) oder in gemischten Variationen ausgeführt werden.
- Maßnahme 7:: Verwendung des Manchester Datenformates zur Erhöhung der Empfängerempfindlichkeit und Stabilisierung der Tranceiver Arbeitspunkte.
- Maßnahme 8:: Kalibration von Parametern der Funkstrecke zur Laufzeit unter der Verwendung von Umweltmessungen (zum Beispiel Temperaturmessung, Spannungsmessung, etc.).
- Maßnahme 9:: Durch geeignete Schaltungstechniken (sogenannte Blocking-Maßnahmen) wird die Immunität gegenüber eingestrahlten Energien im Vergleich zur derzeit gesetzlich notwendigen erhöht.
- Maßnahme 10:: Der Verfügbarkeitszeitraum wird vergrößert, indem es möglich gemacht wird, die Funkstrecke während des Aufladens eines Versorgungspannungs-Akkumulators weiterlaufen zu lassen.

Wenngleich einzelne dieser Maßnahmen aus anderen HF-technischen Anwendungen bekannt sind, zeichnet sich die Erfindung dadurch aus, dass sie - vor dem Hintergrund der Notwendigkeit nach dem Ruhestromprinzip zu arbeiten - in der Nutzung für sicherheitsgerichtete Anwendungen bislang unbekannt sind.

## Patentansprüche

1. Verfahren zur Erfassung, Übertragung und Auswertung sicherheitsgerichteter Signale mit mindestens einer zumindest einen Sender (28, 120, 122) aufweisenden Mobilstation (12, 70, 118), einer Funkstrecke (14) und einer zumindest einen Empfänger (50, 88, 90) aufweisenden Basisstation (16, 86, 100, 110), wobei an Eingabemitteln (24) wie Tastschalter der Mobilstation (12, 70, 118) anliegende Signale mittels einer Erfassungseinheit (18) erfasst und entsprechende Signaldaten (26) generiert werden, welche über den Sender (28,120,122) und die Funkstrecke (14) ausgesendet und von dem zumindest einen Empfänger (50, 88, 90) der Basisstation (16, 86, 100, 110) empfangen und in zumindest einer Auswerteeinheit (54, 56) ausgewertet werden, wobei als Reaktion auf die empfangenen Signaldaten (26) sichere und/oder nicht sichere Ausgänge (60.1, 60.2; 62.1 - 62.3) geschaltet werden,
wobei sicherheitsgerichtete Signale geringer Sicherheitsstufe durch die Erfassungseinheit (18) einkanalig erfasst werden, wobei zumindest ein sicherheitsgerichtetes Signal hoher Sicherheitsstufe derart erzeugt wird, dass mittels eines Eingabemittels (32) die Stromversorgung der Erfassungseinheit (18) und/oder des Senders (28) mit der Folge unterbrochen wird, dass die Aussendung von Signaldaten (26) unterbrochen ist und wobei das Ausbleiben von von der Mobilstation (12, 70, 118) gesendeten Signaldaten (26) mittels einer Zeiterwartungsschaltung in der Basissta-tion (16, 86, 100, 110) erkannt wird und bei Ausbleiben von Signaldaten innerhalb eines definierten Zeitfensters die sicheren Ausgänge (60.1, 60.2) der Basisstation in einen sicheren Zustand geschaltet werden.

2. Verfahren nach Anspruch 1,
**dadurch gekennzeichnet,**
**dass** die Stromversorgung einpolig unterbrochen wird.

3. Verfahren nach Anspruch 1 oder 2,
**dadurch gekennzeichnet,**
**dass** die Stromversorgung zweipolig unterbrochen wird.

4. Verfahren nach zumindest einem der vorhergehenden Ansprüche,
**dadurch gekennzeichnet,**
**dass** nur Signale geringer Sicherheitsstufe wie KAT2/SIL1 über die Funkstrecke (14) von der Mobilstation (12, 70, 118) zu der Basisstation (16, 86, 100, 110) übertragen werden.

5. Verfahren nach zumindest einem der vorhergehenden Ansprüche,
**dadurch gekennzeichnet,**
**dass** zur Übertragung der sicherheitsgerichteten Signale geringer Sicherheitsstufe wie KAT2/SIL1 ein Telegramm (ST) mit sicherheitsgerichteten Informationen gebildet wird, welches einen Identifier-Teil (ID) der Mobilstation (12), einen Zähler-Teil (CNT), einen Daten-Teil (DATA) und einen Prüfsummen-Teil (CRC) aufweist.

6. Verfahren nach zumindest einem der vorhergehenden Ansprüche,
**dadurch gekennzeichnet,**
**dass** das Telegramm (ST) innerhalb eines Übertragungsrahmens (134) mehrmals, vorzugsweise dreimal gesendet wird.

7. Verfahren nach zumindest einem der vorhergehenden Ansprüche,
**dadurch gekennzeichnet,**
**dass** die Telegramme (ST) mit Duty-Cycle in Intervallen gesendet werden, vorzugsweise alle 40 ms, vorzugsweise drei Telegramme mit einer Gesamtdauer von ca. 10 ms.

8. Verfahren nach zumindest einem der vorhergehenden Ansprüche,
**dadurch gekennzeichnet,**
**dass** innerhalb des Übertragungsrahmens (134) zusätzlich zu den Telegrammen (ST) ein Telegramm (ZT) mit einem Batterie-Teil, einem Betriebs-Teil, einem Kalibrier-Teil und einem Reserve-Teil gesendet wird.

9. Verfahren nach zumindest einem der vorhergehenden Ansprüche,
**dadurch gekenntzeichnet**,
dass der Batteriezustand des Mobil-Teils durch den Batterie-Teil, der Betriebszustand des Mobil-Teils durch den Betriebs-Teil, der Kalibrierstatus des Mobil-Teils durch den Kalibrier-Teil übertragen wird.

10. Verfahren nach zumindest einem der vorhergehenden Ansprüche,
**dadurch gekennzeichnet,**
**dass** die Telegramme (ST, ZT) ohne Duty-Cycle kontinuierlich gesendet werden.

11. Verfahren nach zumindest einem der vorhergehenden Ansprüche,
**dadurch gekennzeichnet,**
**dass** die Telegramme (ST, ZT) in verschiedenen Frequenzbändern wie 433 MHz₋ Band oder 868 MHz-Band gesendet werden.

12. Verfahren nach zumindest einem der vorhergehenden Ansprüche,
**dadurch gekennzeichnet,**
**dass** die Telegramme (ST, ZT) im Duty-Cycle-Betrieb abwechselnd im 433 MHZ-Band und 868 MHZ-Band gesendet werden.

13. Verfahren nach zumindest einem der vorhergehenden Ansprüche,
**dadurch gekennzeichnet,**
**dass** die Telegramme (ST, ZT) im Duty-Cyle-Betrieb während einer Einschaltdauer (140) gesendet werden, die ≤ 10 % der Periodendauer ist.

14. Verfahren nach zumindest einem der vorhergehenden Ansprüche,
**dadurch gekennzeichnet,**
**dass** die Telegramme mit einer Baudrate von 19200 Baud gesendet werden.

15. Verfahren nach zumindest einem der vorhergehenden Ansprüche,
**dadurch gekennzeichnet,**
**dass** die empfangenen Telegramme (68) in der Basisstation (16) zweikanalig ausgewertet werden auf:
• Identifier (ID) der Mobilstation (12)
• Zählerstand der Mobilstation (12) und
• Sendezyklus

16. Verfahren nach zumindest einem der vorhergehenden Ansprüche,
**dadurch gekennzeichnet,**
**dass** Prüfsummenwerte des CRC-Teils des Telegramms (68) in einer Tabelle der Mobilstation (12) gespeichert werden.

17. Verfahren nach zumindest einem der vorhergehenden Ansprüche,
**dadurch gekennzeichnet,**
**dass** bei einer Inbetriebnahme der Funkstrecke (14) eine Konfiguration der Mobilstation (12) und der Basisstation (16) mittels eines Personal Computers über eine serielle Schnittstelle erfolgt, wobei in der Mobilstation (12) der Identifier (ID) eingestellt wird und in die Tabelle die Prüfsummenwerte (CR 10) übertragen werden und wobei in der Basisstation (16) der Identifier (ID) der Mobilstation (12) und die in der Mobilstation belegten Eingänge übermittelt werden und das Verhalten der Ausgänge der Basisstation (16) konfiguriert wird.

18. Verfahren nach zumindest einem der vorhergehenden Ansprüche;
**dadurch gekennzeichnet,**
**dass** bei einem Verbindungsaufbau zwischen der Mobilstation (12) und der Basisstation die Funkstrecke (14) in Abhängigkeit von einem sicheren Eingang (22.1 - 22.4) der Mobilstation (12) und/oder der einem Eingang (66) der Basisstation (12) aktiviert und/oder deaktiviert wird und davon abhängig die sicheren und/oder die nicht sicheren Ausgänge der Mobilstation und/oder der Basisstation gesetzt werden.

19. Verfahren nach zumindest einem der vorhergehenden Ansprüche,
**dadurch gekennzeichnet,**
**dass** die Basisstation bei jeder Aktivierung und/oder nach Ablauf einer bestimmten Zeit überprüft, ob alle konfigurierten sicheren Eingänge des Mobilteils (12) einmal geöffnet und/oder einmal geschlossen wurden, bevor die Basisstation (16) einen ihrer sicheren Ausgänge (60.1 - 60.2) freigibt.

20. Vorrichtung zur Erfassung, Übertragung und Auswertung sicherheitsgerichteter Signale, umfassend zumindest eine zumindest einen Sender (28) aufweisende. Mobilstation (12, 70, 118), eine Funkstrecke (14) sowie eine Basisstation (16, 86, 100, 110) mit einem Empfänger (50) und einer zweikanaligen Auswerteeinheit (54, 56), wobei an Eingabemitteln (24) wie Tastschalter der Mobilstation (12, 70, 118) anliegende Signale mittels einer Erfassungseinheit (18) erfasst und entsprechende Signaldaten (26) generiert werden, welche über den Sender (28) und die Funkstrecke (14) ausgesendet und von dem zumindest einen Empfänger (50) der Basisstation (16, 86, 100, 110) empfangen und in der zweikanaligen Auswerte-einheit (54, 56) ausgewertet werden, wobei als Reaktion auf die empfangenen Signaldaten (52) sichere und/oder nicht sichere Ausgänge (60.1, 60.2; 62.1 - 62.3) geschaltet werden,
wobei die Mobilstation (12, 70, 118) eine einkanalige Erfassungseinheit (18) zur einkanaligen Erfassung von an den Eingabemitteln (24) anliegender Signale aufweist, wobei die Erfassungseinheit (18) und/oder der Sender (28) über ein elektro-mechanisches, elektrisches oder elektronisches Sicherheitsschaltgerät (32) mit einer Energieversorgungseinheit (30) verbunden ist, wobei durch Betätigung des Sicherheitsschaltgerätes (32) die Energieversorgung der Erfassungseinheit (18) und/oder des Senders (28) und somit die Aussendung von Signaldaten (26) unterbrechbar ist und wobei die Basisstation (16, 86, 100, 110) eine Zeiterwartungsschal-tung aufweist, welche das Ausbleiben von von der Mobilstation (12, 70, 118) gesendeten Signaldaten (26) erfasst und dass bei Ausbleiben von Signaldaten inner-halb eines definierten Zeitfensters Ausgänge (60.1, 60.2) der Basisstation (16, 86, 100, 110) in einen sicheren Zustand geschaltet werden.

21. Vorrichtung nach Anspruch 20,
**dadurch gekennzeichnet,**
**dass** das Sicherheitsschaltgerät (32) mindestens einen zwangsöffnenden Öffnerkontakt (46, 48) aufweist, welcher in Reihenschaltung mit einer Versorgungsleitung (44) zur Energieversorgung der Erfassungseinheit (18) und/oder des Senders (28) liegt.

22. Vorrichtung nach zumindest einem der vorhergehenden Ansprüche,
**dadurch gekennzeichnet,**
**dass** jeweils ein zwangsöffnender Kontakt (76, 80) in eine Versorgungsleitung (44, 82) zur Energieversorgung der Erfassungseinheit (18) und/oder des Senders (28) angeordnet ist.

23. Vorrichtung nach zumindest einem der vorhergehenden Ansprüche,
**dadurch gekennzeichnet,**
**dass** die Basisstation (86) zwei Empfänger (88, 90) aufweist, wobei jedem Empfänger (88, 90) einer Empfangseinheit (54, 56) zugeordnet ist.

24. Vorrichtung nach zumindest einem der vorhergehenden Ansprüche,
**dadurch gekennzeichnet,**
**dass** die Basisstation (100) einen Empfänger (102) aufweist, welcher mit der Empfangseinheit (54) und der Empfangseinheit (56) gekoppelt ist.

25. Vorrichtung nach zumindest einem der vorhergehenden Ansprüche,
**dadurch gekennzeichnet,**
**dass** die Basisstation (110) zwei Empfänger (88, 90) aufweist, welche jeweils mit beiden Empfangseinheiten (54, 56) gekoppelt wird.

26. Vorrichtung nach zumindest einem der vorhergehenden Ansprüche,
**dadurch gekennzeichnet**
**dass** die Mobilstation (12, 70) ein Erfassungsmittel (18) wie Mikroprozessor aufweist, mit einer Vielzahl von Ausgängen (20.1 - 20.4) und einer Vielzahl von Eingängen (22.1 - 22.4), wobei jeweils ein Ausgang über ein Eingabemittel (24) wie Taster mit einem der Eingänge (22.1 - 22.4) verbindbar ist.

27. Vorrichtung nach zumindest einem der vorhergehenden Ansprüche,
**dadurch gekennzeichnet,**
**dass** die Erfassungsmittel (54, 56) der Basisstation (16, 86, 100, 110) über eine verbindung (58) miteinander gekoppelt sind, wodurch ein kreuzweiser Datenver- H gleich durchführbar ist.

28. Vorrichtung nach zumindest einem der vorhergehenden Anspruch,
**dadurch gekennzeichnet,**
**dass** zumindest eine der Erfassungseinheiten (54, 56) eine Vielzahl nicht sicherer Ausgänge (62.1- 62.3) aufweist.

29. Vorrichtung nach zumindest einem der vorhergehenden Ansprüche,
**dadurch gekennzeichnet,**
**dass** die Erfassungseinheiten (54, 56) jeweils einen ersten und einen zweiten Ausgang aufweisen, wobei die ersten Ausgänge miteinander verbunden sind und einen ersten sicheren Ausgang (60.1) bilden und wobei die zweiten Ausgänge untereinander verbunden sind und einen zweiten sicheren Ausgang (60.2) bilden.

30. Vorrichtung nach zumindest einem der vorhergehenden Ansprüche,
**dadurch gekennzeichnet,**
**dass** die Basisstation (16, 86, 100, 110) über die sicheren Eingänge (96.1, 96.2) aktivierbar ist.

## Claims

1. Method for detecting, transmitting and evaluating safety-oriented signals with at least one mobile station (12, 70, 118) having at least one transmitter (28, 120, 122), one radio path (14) and a base station (16, 86, 100, 110) having at least one receiver (50, 88, 90), where signals present at input means (24) such as pushbutton switches of the mobile station (12, 70, 118) are detected by a detection unit (18) and corresponding signal data (26) are generated that are emitted via the transmitter (28, 120, 122) and the radio path (14) and are received by at least one receiver (50, 88, 90) of the base station (16, 86, 100, 110) and evaluated in at least one evaluation unit (54, 56), where safe and/or non-safe outputs (60.1, 60.2; 62.1 - 62.3) are switched as a reaction to the received signal data (26), where safety-oriented signals of a low safety category are detected on a single channel basis by the detection unit (18), at least one safety-oriented signal of a high safety category is generated such that the current supply to the detection unit (18) and/or to the transmitter (28) is interrupted by an input means (32) with the result that the emission of signal data (26) is interrupted and where the absence of signal data (26) transmitted by the mobile station (12, 70, 118) is recognized by a time-out circuit in the base station (16, 86, 100, 110) and the safe outputs (60.1, 60.2) of the base station are switched to a safe state when signal data are absent inside a defined time window.

2. Method according to Claim 1,
**wherein**
the current supply is interrupted on a single pole basis.

3. Method according to Claim 1 or Claim 2,
**wherein**
the current supply is interrupted on a dual pole basis.

4. Method according to at least one of the preceding claims,
**wherein**
only signals of a low safety category such as KAT2/SIL1 are transmitted via the radio path (14) from the mobile station (12, 70, 118) to the base station (16, 86, 100, 110).

5. Method according to at least one of the preceding claims,
**wherein**
for transmission of the safety-oriented signals of a low safety category such as KAT2/SIL1 a telegram (ST) with safety-oriented information is formed which has an identifier part (ID) of the mobile station (12), a counter part (CNT), a data part (DATA) and a checksum part (CRC).

6. Method according to at least one of the preceding claims,
**wherein**
the telegram (ST) is transmitted several times, preferably three times, inside a transmission frame (134).

7. Method according to at least one of the preceding claims,
**wherein**
the telegrams (ST) with duty cycle are transmitted at intervals, preferably every 40 ms, preferably three telegrams with a total duration of approx. 10 ms.

8. Method according to at least one of the preceding claims,
**wherein**
a telegram (ZT) with a battery part, an operating part, a calibration part and a reserve part is transmitted inside the transmission frame (134) in addition to the telegrams (ST).

9. Method according to at least one of the preceding claims,
**wherein**
the battery state of the mobile part is transmitted by the battery part, the operating state of the mobile part by the operating part, and the calibration status of the mobile part by the calibration part.

10. Method according to at least one of the preceding claims,
**wherein**
the telegrams (ST, ZT) without duty cycle are transmitted continuously.

11. Method according to at least one of the preceding claims,
**wherein**
the telegrams (ST, ZT) are transmitted in different frequency bands such as the 433 MHz band or the 868 MHz band.

12. Method according to at least one of the preceding claims,
**wherein**
the telegrams (ST, ZT) in the duty cycle mode are transmitted alternatingly in the 433 MHz band and the 868 MHz band.

13. Method according to at least one of the preceding claims,
**wherein**
the telegrams (ST, ZT) in the duty cycle mode are transmitted during a power-on duration (140) that is ≤10% of the period duration.

14. Method according to at least one of the preceding claims,
**wherein**
the telegrams are transmitted with a baud rate of 19200 baud.

15. Method according to at least one of the preceding claims,
**wherein**
the received telegrams (68) are evaluated in the base station (16) on a dual channel basis for:
• identifier (ID) of the mobile station (12)
• counter reading of the mobile station (12) and
• transmission cycle.

16. Method according to at least one of the preceding claims,
**wherein**
checksum values of the CRC part of the telegram (68) are saved in a table of the mobile station (12).

17. Method according to at least one of the preceding claims,
**wherein**
during putting into service of the radio path (14) the mobile station (12) and the base station (16) are configured using a personal computer via a serial interface, where the identifier (ID) is set in the mobile station (12) and the checksum values (CR10) are transferred into the table, and where the identifier (ID) of the mobile station (12) and the inputs in use in the mobile station are transmitted in the base station (16) and the behaviour of the outputs of the base station (16) is configured.

18. Method according to at least one of the preceding claims,
wherein
during buildup of a connection between the mobile station (12) and the base station the radio path (14) is activated and/or deactivated depending on a safe input (22.1 - 22.4) of the mobile station (12) and/or on an input (66) of the base station (12), and the safe and/or the non-safe outputs of the mobile station and/or the base station are set depending thereon.

19. Method according to at least one of the preceding claims,
**wherein**
the base station checks at every activation and/or after expiry of a certain time whether all configured safe inputs of the mobile station (12) are opened once and/or closed once before the base station (16) enables one of its safe outputs (60.1 - 60.2).

20. Device for detecting, transmitting and evaluating safety-oriented signals with at least one mobile station (12, 70, 118) having at least one transmitter (28), one radio path (14) and a base station (16, 86, 100, 110) with one receiver (50) and a dual channel evaluation unit (54, 56), where signals present at input means (24) such as pushbutton switches of the mobile station (12, 70, 118) are detected by a detection unit (18) and corresponding signal data (26) are generated that are emitted via the transmitter (28) and the radio path (14) and are received by the at least one receiver (50) of the base station (16, 86, 100, 110) and evaluated in the dual channel evaluation unit (54, 56), where safe and/or non-safe outputs (60.1, 60.2; 62.1 - 62.3) are switched as a reaction to the received signal data (26), where the mobile station (12, 70, 118) has a single channel detection unit (18) for single channel detection of signals present at the input means (24), where the detection unit (18) and/or the transmitter (28) is connected to an energy supply unit (30) via an electro-mechanical, electrical or electronic safety switching device (32), where by operating the safety switching device (32) the energy supply to the detection unit (18) and/or to the transmitter (28) and hence the emission of signal data (26) is interruptible, and where the base station (16, 86, 100, 110) has a time-out circuit which detects the absence of signal data (26) transmitted by the mobile station (12, 70, 118) and outputs (60.1, 60.2) of the base station (16, 86, 100, 110) are switched to a safe state when signal data are absent inside a defined time window.

21. Device according to Claim 20,
**wherein**
the safety switching device (32) has at least one positively opening NC contact (46, 48) which is connected in series to a supply line (44) for energy supply to the detection unit (18) and/or to the transmitter (28).

22. Device according to at least one of the preceding claims,
**wherein**
one positively opening contact (76, 80) each is arranged in a supply line (44, 82) for energy supply to the detection unit (18) and/or to the transmitter (28).

23. Device according to at least one of the preceding claims,
**wherein**
the base station (86) has two receivers (88, 90), where each receiver (88, 90) is assigned one receiver unit (54, 56).

24. Device according to at least one of the preceding claims,
**wherein**
the base station (100) has a receiver (102) which is connected to the receiver unit (54) and to the receiver unit (56).

25. Device according to at least one of the preceding claims,
**wherein**
the base station (110) has two receivers (88, 90) which each are connected to both receiver units (54, 56).

26. Device according to at least one of the preceding claims,
**wherein**
the mobile station (12, 70) has a detecting means (18) such as a microprocessor with a plurality of outputs (20.1 - 20.4) and a plurality of inputs (22.1 - 22.4) where in each case an output is connectable via an input means (24) such as a pushbutton to one of the inputs (22.1 - 22.4).

27. Device according to at least one of the preceding claims,
**wherein**
the detecting means (54, 56) of the base station (16, 86, 100, 110) are connected to one another via a connection (58), thereby permitting cross-comparison of the data.

28. Device according to at least one of the preceding claims,
**wherein**
at least one of the detecting units (54, 56) has a plurality of non-safe outputs (62.1 - 62.3).

29. Device according to at least one of the preceding claims,
**wherein**
the detecting units (54, 56) each have a first and second output, where the first outputs are connected to one another and form a first safe output (60.1) and where the second outputs are connected to one another and form a second safe output (60.2).

30. Device according to at least one of the preceding claims,
**wherein**
the base station (16, 86, 100, 110) can be activated via the safe inputs (96.1, 96.2).

## Revendications

1. Procédé pour obtenir, transmettre et évaluer des signaux liés à la sécurité avec au moins une station mobile (12, 70, 118) présentant au moins un émetteur (28, 120, 122), une liaison radio (14) et une station de base (16, 86, 100, 110) présentant au moins un récepteur (50, 88, 90), sachant que des signaux se trouvant sur des moyens de saisie (24) tels qu'un interrupteur à poussoir de la station mobile (12, 70, 118) sont détectés à l'aide d'une unité de détection (18) et que des données de signal (26) correspondantes sont générées, lesquelles sont envoyées par l'intermédiaire de l'émetteur (28, 120, 122) et de la liaison radio (14) et reçues par le récepteur (50, 88, 90) au moins en présence de la station de base (16, 86, 100, 110) puis évaluées dans au moins une unité d'évaluation (54, 56), sachant que des sorties protégées et/ou non protégées (60.1, 60.2, 62.1 - 62.3) sont commutées en réaction aux données de signal reçues (26), sachant que les signaux liés à la sécurité de faible niveau de sécurité sont détectés en monovoie par l'unité de détection (18), qu'au moins un signal lié à la sécurité de haut niveau de sécurité est produit de telle manière que l'alimentation électrique de l'unité de détection (18) et/ou de l'émetteur (28) est interrompue par l'intermédiaire d'un moyen de saisie (32), si bien que l'émission des données de signal (26) est interrompue, et sachant que l'absence de données de signal (26) envoyées par la station mobile (12, 70, 118) est détectée à l'aide d'un circuit de surveillance des délais d'attente dans la station de base (16, 86, 100, 110) et que, en cas d'absence de données de signal dans un intervalle de temps défini, les sorties protégées (60.1 - 60.2) de la station de base sont commutées dans un état protégé.

2. Procédé selon la revendication 1,
**caractérisé en ce**
**que** l'alimentation électrique est interrompue de manière unipolaire.

3. Procédé selon la revendication 1 ou 2,
**caractérisé en ce**
**que** l'alimentation électrique est interrompue de manière bipolaire.

4. Procédé selon au moins l'une des revendications précédentes,
**caractérisé en ce**
**que** seuls des signaux de faible niveau de sécurité tels que KAT2/SIL1 sont transmis de la station mobile (12, 70, 118) à la station de base (16, 86, 100, 110) par l'intermédiaire de la liaison radio (14).

5. Procédé selon au moins l'une des revendications précédentes,
**caractérisé en ce**
**que**, pour transmettre les signaux liés à la sécurité de faible niveau de sécurité, tels que KAT2/SIL1, est produit un télégramme (ST) avec des informations relatives à la sécurité qui présente une partie d'identification (ID) de la station mobile (12), une partie compteur (CNT), une partie données (DATA) et une partie sommes de contrôle (CRC).

6. Procédé selon au moins l'une des revendications précédentes,
**caractérisé en ce**
**que** le télégramme (ST) est envoyé plusieurs fois, de préférence trois fois, dans une trame de transmission (134).

7. Procédé selon au moins l'une des revendications précédentes,
**caractérisé en ce**
**que** les télégrammes (ST) en rapport cyclique sont envoyés par intervalles, de préférence toutes les 40 ms, de préférence trois télégrammes dans une durée totale d'environ 10 ms.

8. Procédé selon au moins l'une des revendications précédentes,
**caractérisé en ce**
**que**, dans la trame de transmission (134), un télégramme (ZT) avec une partie batterie, une partie service, une partie calibrage et une partie réserve est envoyé en plus des télégrammes (ST).

9. Procédé selon au moins l'une des revendications précédentes,
**caractérisé en ce**
**que** l'état de charge de la batterie de la partie mobile est transmis par l'intermédiaire de la partie batterie, l'état de service de la partie mobile par la partie service, l'état du calibrage de la partie mobile par la partie calibrage.

10. Procédé selon au moins l'une des revendications précédentes,
**caractérisé en ce**
**que** les télégrammes (ST, ZT) sans rapport cyclique sont envoyés continuellement.

11. Procédé selon au moins l'une des revendications précédentes,
**caractérisé en ce**
**que** les télégrammes (ST, ZT) sont envoyés dans différentes bandes de fréquence telles qu'une bande de fréquence de 433 MHz ou de 868 MHz.

12. Procédé selon au moins l'une des revendications précédentes,
**caractérisé en ce**
**que** les télégrammes (ST, ZT) en rapport cyclique sont envoyés alternativement dans la bande de 433 MHz et dans la bande de fréquence de 868 MHz.

13. Procédé selon au moins l'une des revendications précédentes,
**caractérisé en ce**
**que** les télégrammes (ST, ZT) en rapport cyclique sont envoyés pendant une durée de marche (140) qui est ≤ 10 % à la durée de période.

14. Procédé selon au moins l'une des revendications précédentes,
**caractérisé en ce**
**que** les télégrammes sont envoyés à une vitesse de transmission de 19 200 bauds.

15. Procédé selon au moins l'une des revendications précédentes,
**caractérisé en ce**
**que** les télégrammes reçus (68) sont évalués dans la station de base (16) sur deux voies pour :
■ l'identifiant (ID) de la station mobile (12),
■ l'état du compteur de la station mobile (12), et
■ le cycle d'envoi.

16. Procédé selon au moins l'une des revendications précédentes,
**caractérisé en ce**
**que** les valeurs totales de contrôle de la partie CRC du télégramme (68) sont enregistrées dans une table de la station mobile (12).

17. Procédé selon au moins l'une des revendications précédentes,
**caractérisé en ce**
**que**, lors d'une mise en service de la liaison radio (14), une configuration de la station mobile (12) et de la station de base (16) s'opère au moyen d'un ordinateur personnel par l'intermédiaire d'une interface sérielle, sachant que l'identifiant (ID) est paramétré dans la station mobile (12) et les valeurs totales de contrôle (CR10) transférées dans la table, et que, dans la station de base (16), l'identifiant (ID) de la station mobile (12) et les entrées occupées dans la station mobile sont transmis et que le comportement des sorties de la station de base (16) est configuré.

18. Procédé selon au moins l'une des revendications précédentes,
**caractérisé en ce**
**que**, lors de l'établissement d'une connexion entre la station mobile (12) et la station de base, la liaison radio (14) est activée et/ou désactivée en fonction d'une entrée protégée (22.1 - 22.4) de la station mobile (12) et/ou d'une entrée (66) de la station de base (12) et que les sorties protégées et/ou non protégées de la station mobile et/ou de la station de base sont commutées sur cette base.

19. Procédé selon au moins l'une des revendications précédentes,
**caractérisé en ce**
**que** la station de base vérifie à chaque activation et/ou après expiration d'un certain temps, si toutes les entrées protégées configurées de la partie mobile (12) ont été ouvertes une fois et/ou fermées une fois avant que la station de base (16) ne libère une de ses sorties protégées (60.1 - 60.2).

20. Dispositif pour obtenir, transmettre et analyser des signaux liés à la sécurité, comprenant au moins une station mobile (12, 70, 118) présentant au moins un émetteur (28), une liaison radio (14) ainsi qu'une station de base (16, 86, 100, 110) avec un récepteur (50) et une unité d'évaluation à deux voies (54, 56), sachant que les signaux se trouvant sur des moyens de saisie (24) tels qu'un commutateur à action fugitive de la station mobile (12, 70, 118) sont détectés à l'aide d'une unité de détection (18) et que des données de signal (26) correspondantes sont générées, lesquelles sont envoyées par l'intermédiaire de l'émetteur (28) et de la liaison radio (14) et reçues par le récepteur (50) au moins en présence de la station de base (16, 86, 100, 110) puis évaluées dans l'unité d'évaluation (54, 56) à deux voies, sachant que des sorties protégées et/ou non protégées (60.1, 60.2, 62.1 - 62.3) sont commutées en réaction aux données de signal reçues (26), sachant que la station mobile (12, 70, 118) présente une unité de détection (18) monovoie pour la détection monovoie des signaux se trouvant sur les moyens de saisie (24), que l'unité de détection (18) et/ou l'émetteur (28) est relié à une unité d'alimentation en énergie (30) par l'intermédiaire d'un appareil de commutation de sécurité (32) électromécanique, électrique ou électronique, sachant que l'actionnement de l'appareil de commutation de sécurité (32) permet d'interrompre l'alimentation en énergie de l'unité de détection (18) et/ou de l'émetteur (28) et ainsi l'émission de données de signal (26), et que la station de base (16, 86, 100, 110) présente un circuit de surveillance des délais d'attente qui détecte l'absence de données de signal (26) envoyées par la station mobile (12, 70, 118), et que les sorties protégées (60.1 - 60.2) de la station de base (16, 86, 100, 110) sont commutées dans un état protégé en cas d'absence de données de signal dans un intervalle de temps défini.

21. Dispositif selon la revendication 20,
**caractérisé en ce**
**que** l'appareil de commutation de sécurité (32) présente au moins un contact d'ouverture à ouverture forcée (46, 48) qui est monté en série avec une ligne d'alimentation (44) pour l'alimentation en énergie de l'unité de détection (18) et/ou de l'émetteur (28).

22. Procédé selon au moins l'une des revendications précédentes,
**caractérisé en ce**
**qu'**est disposé respectivement un contact à ouverture forcée (76, 80) dans une ligne d'alimentation (44, 82) pour l'alimentation en énergie de l'unité de détection (18) et/ou de l'émetteur (28).

23. Procédé selon au moins l'une des revendications précédentes,
**caractérisé en ce**
**que** la station de base (86) présente deux récepteurs (88, 90), sachant qu'une unité de réception (54, 56) est attribuée à chaque récepteur (88, 90).

24. Procédé selon au moins l'une des revendications précédentes,
**caractérisé en ce**
**que** la station de base (100) présente un récepteur (102) couplé à l'unité de réception (54) et à l'unité de réception (56).

25. Procédé selon au moins l'une des revendications précédentes,
**caractérisé en ce**
**que** la station de base (110) présente deux récepteurs (88, 90) couplés respectivement aux deux unités de réception (54, 56).

26. Procédé selon au moins l'une des revendications précédentes,
**caractérisé en ce**
**que** la station mobile (12, 70) présente un moyen de saisie (18) tel qu'un microprocesseur, avec un grand nombre de sorties (20.1 - 20.4) et un grand nombre d'entrées (22.1 - 22.4), sachant que respectivement une sortie peut être reliée à une des entrées (22.1 - 22.4) par l'intermédiaire d'un moyen de saisie (24) telle qu'un bouton-poussoir.

27. Procédé selon au moins l'une des revendications précédentes,
**caractérisé en ce**
**que** les moyens de saisie (54, 56) de la station de base (16, 86, 100, 110) sont couplés entre eux par l'intermédiaire d'une liaison (58), si bien qu'une comparaison de données en croix peut être réalisée.

28. Procédé selon au moins l'une des revendications précédentes,
**caractérisé en ce**
**qu'**au moins une des unités de saisie (54, 56) présente un grand nombre de sorties non protégées (62.1 - 62.3).

29. Procédé selon au moins l'une des revendications précédentes,
**caractérisé en ce**
**que** les unités de saisie (54, 56) présentent respectivement une première et une deuxième sortie, sachant que les premières sorties sont reliées entre elles et forment une première sortie protégée (60.1), et que les deuxièmes sorties sont reliées entre elles et forment une deuxième sortie protégée (60.2).

30. Procédé selon au moins l'une des revendications précédentes,
**caractérisé en ce**
**que** la station de base (16, 86, 100, 110) peut être activée par l'intermédiaire des entrées protégées (96.1, 96.2).
